# EUROPEAN PATENT APPLICATION

(11) **EP 1 486 129 A2**
(43) Date of publication of application: **15.12.2004**
(21) Application number: 02799142.1
(22) Date of filing: 18.12.2002
(51) Int. Cl.: A23L 2/54, F17C 1/00, A61J 3/00

(54) **INDIVIDUAL MEANS FOR PRODUCING OXYGEN COCKTAIL AND THE OXYGEN CYLINDER THEREFOR**

(30) Priority: 19.12.2001 RU 2001133876; 17.06.2002 RU 2002115394
(71) Applicant: Kutyev, Anatoly Anatolyevich, Moscow, 117133 (RU)
(72) Inventor: Kutyev, Anatoly Anatolyevich, Moscow, 117133 (RU)
(74) Representative: Gritschneder, Martin, Dipl.-Phys.
(86) International application number: PCT/RU2002/000536
(87) International publication number: WO 2003/052046

(57) **Abstract**

The invention relates to the food industry, namely, to the devices for preparation of spumescent oxygen cocktail, that is a beverage saturated with oxygen wherein gaseous oxygen is present in liquid in form of bubbles.

The personal device for preparation of spumescent oxygen cocktail comprising a tank with liquid and a gas bottle made in form of a tank wherein pressurized oxygen is contained. The gas bottle is equipped with an outlet valve through which it is connected with a nozzle made in form of a sprayer to be placed in the tank with liquid to provide formation of spumescent oxygen cocktail when oxygen is fed into the liquid. The gas tank is made from food aluminum or sheet metal with a wall thickness of 0.1 to 0.83 mm, 0.1 to 90 1 of oxygen are contained in the bottle under a pressure within the range from 2 to 30 atm, oxygen being fed into the liquid at a rate up to 1.5 1/min. The technical effect consists in the improvement of the personal device service conditions, regardless of a user's age, in improving the quality of preparation of the dosed spumescent oxygen cocktail as well as in extending the field of application of the personal device both at home and in small medical establishments, in catering establishments since they do not require special instructions and accessories.

## Description

### Field of art

Invention relates to the food industry, namely, to the devices for preparation of spumescent oxygen cocktail, that is, a spumescent beverage saturated with oxygen wherein gaseous oxygen exists in the liquid in form of bubbles.

There is known a device for feeding gas into liquid, which comprises a mixing tank for liquid and an aerator unit designed for aerating the lateral part of liquid flow and feeding it to the tank for mixing the aerated liquid with the liquid circulating in the tank (RU 2139132 C1, B 01 F 3 / 04, published on 10.10.1999).

There is known a device for liquid saturation with gas comprising a mass exchange flow-through mixing chamber with a convergent-cone channel connected to a liquid supply source, and a gas nozzle at the chamber inlet connected to a compressed gas supply source (RU 2057576 C1, B 01 F 3 / 04, published on 10.04.1996).

There is known a device for saturation of liquid with gas comprising a vertical cylindrical body, with a gas inlet branch and a mixer with a vibration drive connected to its bottom. (RU 2006279 C1, B 01 F 13/02, published on 30.01.1994).

The known devices have a stationary equipment in the dedicated areas with observance of operating safety conditions, and they are designed for preparation of the cocktail for public users for therapeutic and prophylactic purposes. These devices have an elaborate design, and they cannot be used for preparing personal or single batches of the spumescent oxygen cocktail in travelling conditions or at home.

There is also known a device for preparing a carbonated beverage, which comprises a gas bottle containing a pressurized gas with an outlet valve (US 5870944, A 23 L 2/54, published on 16.02.1999).

The disadvantage of this device is its inability to make the cocktail, in particular the spumescent oxygen cocktail in domestic conditions, since the known device affords the supply of carbonic-acid gas to a sealed tank and does not provide saturation of a beverage with gas just before use as is necessary for spumescent oxygen cocktail because oxygen is present in the beverage for a limited period of time.

### Disclosure of invention

The objective aimed at by invention is creation of a personal device for preparing the spumescent oxygen cocktail, which has wide technical capabilities enabling the expansion of its application both in domestic conditions and in small medical establishments, in catering establishments as well as in travelling and transport conditions, for example, when travelling by air, since it does not require special instructions and accessories.

The technical result consists in the fact that the personal device made in form of a gas bottle is designed for preparation of one or several batches of spumescent oxygen cocktail, it is convenient in service, safe in use, it can be used by children and elderly people since the bottle volume, its dimensions and weight are small and designed for preparation of spumescent oxygen cocktail with a certain required oxygen concentration of the liquid. Structurally the gas bottle is reliable and easy to control, it does not require special skills and accessories. Another feature of the invention is that the used parameters of gaseous atmosphere, namely the gas pressure and its volume rule out the possibility of injuries, when using the personal device for preparation of spumescent oxygen cocktail having medicinal properties. The weight of the gas bottle resulting from parameters and properties of oxygen is so small that it is convenient for use by children and elderly people what cannot be said about the industrial purpose gas bottles for spumescent oxygen cocktail preparation whose weight runs to 50 kg, and a gas pressure is as high as 100-150 atm.

To obtain the technical result there is provided the personal device for preparation of spumescent oxygen cocktail comprising the tank with liquid and the gas bottle made in form of a tank with pressurized oxygen inside it, said gas bottle is equipped by an outlet valve, which connects the bottle to the nozzle made in form of a sprayer, said sprayer is placed in the liquid tank to provide the formation of spumescent oxygen cocktail when oxygen is fed to the liquid. 0.1 - 90 1 of oxygen is contained in the bottle within the pressure range from 2 to 30 atm.

There are possible also another variations of the invention according to which it is necessary:
- to add egg-white and/or herbal tea and/or juice to liquid as an additive for preparation of spumescent oxygen cocktail;
- to make the sprayer from ceramic or metal fine-pore material;
- to make an outlet valve connected with the sprayer via a flexible tube with a length chosen so that the sprayer can be placed at the bottom of the tank with liquid;
- to make the outlet valve connected with the sprayer via a rigid tube and place it so that the valve can be opened by pressing the sprayer on the bottom of the liquid tank;
- to make the liquid tank tapering to the top;
- to inject oxygen into the liquid at a velocity of up to 1.5 1/min.

The other object of protection is the gas bottle designed for use in the personal device for preparation of spumescent oxygen cocktail. The invention under certificate of RF # 22851 published on 10.05.02 is taken as the closest prototype of the gas bottle.

To solve the set task and to obtain the technical result the gas bottle is equipped with an outlet valve and made in form of a tank wherein pressurized oxygen is present, the gas bottle being made from aluminum or sheet metal with a wall thickness from 0.1 to 0.83 mm, the outlet valve being made so that it can withstand a pressure up to 35 atm.

It is advisable to make a gas bottle with a capacity of 330 ml wherein 6 1 of oxygen is contained under a pressure of 18 atm.

### Brief description of drawings

Fig. 1 shows a gas bottle with a flexible tube.
Fig. 2 shows a bottle with a rigid tube.

### The best embodiment of invention

The invention is exemplified by a specific embodiment, which however is not the only possible one but clearly demonstrates the possibility to achieve the specified technical result by this combination of essential features.

The personal device is designed for preparation of spumescent oxygen cocktail for personal purpose at home or in the country house as well as it can find an application in small catering establishments and during travelling by air. This wide application of the personal device was made possible due to the fact that its handling does not require special skills and instructions for preparation of spumescent oxygen cocktail in form of a beverage saturated by oxygen, so called "oxygen foam". Another feature of the invention is that the special permission for its use is not required.

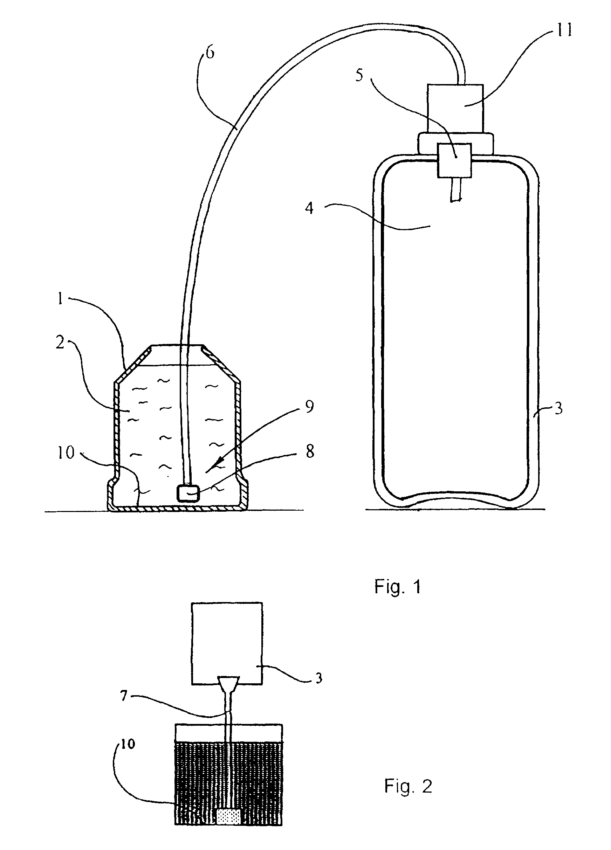

The personal device for spumescent oxygen cocktail preparation comprises tank 1 (Fig. 1) with liquid 2, gas bottle 3 wherein 0.1 to 90 1 of oxygen 4 are contained under a pressure of 2 to 30 atm. Among other factors, the amount of oxygen and its pressure are determined by user's needs and by the purpose. In particular, during a flight by air it is sufficient to use one bottle with a capacity of 1000 ml containing 18 1 of oxygen under a pressure of 18 atm. The weight of such bottle makes up about 150-200 g. Tank 1 with liquid is tapering upward, which reduces oxygen escape from the liquid.

Gas bottle 3 is equipped by valve 5, which is connected to the gas supply line. In one of the variations of the invention the gas supply line is made in form of flexible tube 6 (Fig. 1) and in the other variation it is made in form of rigid tube 7 (Fig. 2), with ceramic sprayer 8 mounted at its end. It is possible to place the sprayer in tank 1 with liquid 2 so that the foam is formed while oxygen 4 is fed into liquid 2. With the aim of improving the foam formation efficiency with simultaneous extension of gustatory qualities a herbal tea or a juice, or egg white are added to liquid 2, the use of the latter promotes the formation of foam reducing oxygen escape. In addition, liquid 2 can represent a herbal tea or a juice only. The sprayer can be made from ceramic or metal with a fine-pore structure. Outlet valve 5 can be connected to sprayer 8 by flexible tube 6, whose length is chosen so that sprayer 8 can be mounted in the near-bottom part 9 of tank 1 with liquid 2. Outlet valve 5 can also be connected to sprayer 8 by rigid tube 7 made in form of a metal tube and mounted so that valve 5 can be opened by pressing sprayer 8 on bottom 8 of tank 1 with liquid 2.

In accordance with the invention gas bottle 3 is made in form of a tank from aluminum or sheet metal with a thickness of 0.1 to 0.83 mm wherein pressurized oxygen is contained. The bottle is equipped with outlet valve 5 so that it can withstand the gas internal pressure up to 35 atm. In the case that gas bottle 3 has a capacity of 330 ml, 6 1 of oxygen 4 under a pressure of 18 atm can be contained in it. The weight of this gas bottle 3 is about 70 g. Such solution makes it possible to essentially extend the technical capability and operating functionality of the personal device for preparation of the spumescent oxygen cocktail, which is not only the prophylactic and tonic preparation but also the preparation, which restores mental and physical abilities of a man. The main thing is also that it is not necessary to attend special establishments to obtain a batch of spumescent oxygen cocktail. It is sufficient to have at home a personal device for preparation of spumescent oxygen cocktail in form of gas bottle 3 with oxygen 4 for prompt preparation of spumescent oxygen cocktail.

The amount of oxygen 4 in gas bottle 3 is determined by the need, possibilities of a user and by the purpose of a personal device. In particular, gas bottle 3 with a capacity of 1000 ml can be filled with 18 1 of oxygen under a pressure of 18 atm. This amount is quite sufficient for using one such bottle by the passengers and the crew of the plane during a single flight. The optimal rate of oxygen 4 fed to tank 1 with liquid 2 for preparation of spumescent oxygen cocktail is about 1.5 l/min. The above said operating parameters and bottle dimensions have been determined experimentally.

To prepare the spumescent oxygen cocktail flexible tube 6 (Fig. 1) is dipped into the liquid, with sprayer 8 being placed in near-bottom part 10 of tank 2. Such solution is essential for rational use of oxygen 4 and high-quality preparation of the cocktail. Herbal tea or juice is added to the liquid to improve the efficiency of foam formation with simultaneous improvement of gustatory qualities as well as medicinal and prophylactic properties of the cocktail. The cocktail based on herbal tea or juice can be used. By pressing outlet valve 5 it is opened, and the liquid is saturated by oxygen 4 during a specified time, depending on a rate of oxygen 4 fed through sprayer 8. Thereby it is possible to prepare spumescent oxygen cocktail with a certain oxygen concentration.

Fig. 2 shows a basic diagram of the personal device according to which for preparation of spumescent oxygen cocktail rigid tube 7 is pressed against bottom 11 of tank 1 with liquid 2 and thereby outlet valve 5 opens. Thereafter oxygen 4 is fed under a pressure into liquid 2, and the spumescent oxygen cocktail can be formed as a result of intensive mixing with liquid 2 and partial dissolution in it. A user ingests the prepared spumescent oxygen cocktail in doses, oxygenating the organism.

To provide the control of velocity of oxygen 4 fed to liquid 2 and its complete saturation with oxygen 4 it is fed through outlet valve 5, which can be made with a variable flow area in one of variations.

Pressure reducer 11 of a known design can be mounted at valve 5 outlet for matching the pressure inside bottle 3 with the oxygen rate at valve 5 outlet. This is dictated by using a relatively high pressure of oxygen 4 in bottle 3 of about 30 atm.

### Industrial applicability

The invention conforms to «industrial applicability» standard since it can be embodied with the use of the known materials, means of production and methods.

## Claims

1. A personal device for preparation of spumescent oxygen cocktail, which comprises a tank with liquid and a gas bottle with pressurized oxygen equipped with an outlet valve and connected to a nozzle made in form of a sprayer to be placed in the tank with liquid to provide the formation of spumescent oxygen cocktail, when feeding the oxygen, differing in that the sprayer is made of fine-pored material with a possibility of foam formation when passing the oxygen through it and 0.1 1 to 90 1 of oxygen are contained in the bottle under a pressure within the range of 2 to 30 atm.

2. The device as claimed in claim 1, differing in that the egg white, a herbal tea or a juice are added to the liquid for preparation of spumescent oxygen cocktail.

3. The device as claimed in claim 1, differing in that the sprayer is made from a fine-pore ceramic material or metal.

4. The device as claimed in claim 1 differing in that the outlet valve is connected to the sprayer with a flexible tube whose length is selected so that the sprayer can be placed in the near-bottom part of the tank with liquid.

5. The device as claimed in claim 1 differing in that the valve is connected to the sprayer with a rigid tube and mounted so that it can be opened by pressing the sprayer against the bottom of the tank with liquid.

6. The device as claimed in claim 1 differing in that the tank with liquid is tapered upward.

7. The device as claimed in claim 1 differing in that the oxygen is fed to the liquid at a rate of up to 1.51/min.

8. Gas bottle having an outlet valve and made in form of a tank wherein pressurized oxygen is contained, differing in that the tank is made from aluminum or sheet metal with a thickness of 0.1 to 0.83 mm, and the outlet valve is made so that it can withstand the internal gas pressure up to 35 atm.

9. The device as claimed in claim 8 differing in that the gas bottle has a capacity of 330 ml wherein 61 of oxygen are contained under a pressure of 18 atm.
